# EUROPEAN PATENT APPLICATION

(11) **EP 4 553 789 A1**
(43) Date of publication of application: **14.05.2025**
(21) Application number: 23209207.2
(22) Date of filing: 10.11.2023
(51) Int. Cl.: G06V 10/82, G06V 20/52, G06V 20/62, G06V 20/10

(54) **A CLOUD-BASED SYSTEM FOR DETECTING AN ALARM DETERRENT PLATE COMPRISING AN ARTIFICIAL INTELLIGENCE DETECTION UNIT**

(30) Priority: 07.11.2023 PT 2023119031
(71) Applicant: NOS Inovação, S.A., 4460-191 Porto (PT)
(72) Inventor: Pinto Sequeira dos Santos Graça, Jorge Filipe, 4460-191 Senhora da Hora (PT); Nunes Ferreira, João Miguel, 4460-191 Senhora da Hora (PT); Ferreira Martins, Carlos Manuel, 4460-191 Senhora da Hora (PT); David Rechena, Pedro Miguel, 4460-191 Senhora da Hora (PT); Pimentel Fernandes Maio, Carolina, 4460-191 Senhora da Hora (PT); Soares Capitão, Pedro Miguel, 4460-191 Senhora da Hora (PT); Rodrigues Ferreira Melo, Orlando Duarte, 4460-191 Senhora da Hora (PT)
(74) Representative: do Nascimento Gomes, Rui

(57) **Abstract**

It is the object of the present application, a system for detecting an alarm deterrent plate on a subject building. The system may comprise an AI detection unit (2), including an AI engine (3) and a training module (4), and a wireless communication network (5) configured to establish a bidirectional data communication protocol adapted to at least obtain street view imagery data from a street view imagery provider (1). The AI detection unit (2) may further comprise a wireless interface module (6) configured to support download of street view imagery data. Such data is to be processed by the modules (3, 4) in order to detect the presence of an alarm deterrent plate on a subject building being illustrated by the street view imagery data. The system therefore provides an agnostic hardware solution for automatically and assertively identify and map alarm deterrent plates based on street view imagery data.

## Description

### TECHNICAL FIELD

The present application belongs to the technical fields of digital imaging and information processing. More particularly, it relates to cloud-based systems that perform image recognition on street view images.

### PRIOR ART

Alarm deterrent plates, also known as dissuasive plates, are plates that identify a building in which an alarm system is installed. These plates are not simply a logo, nor do they serve to advertise alarm companies, they are security elements that inform of the connection to an alarm receiving centre, contracted through an alarm company, therefore having a deterrent role. In fact, thieves tend to choose buildings where they can enter without the risk of being detected, and a property secured with an alarm system is not one of them. Consequently, having an alarm deterrent plate reduces the likelihood of theft.

Alarm deterrent plates are projected to meet a set of requirements related with graphic design (e.g., typeface, tone, alarm company logo, colour combinations) to make the plate easily recognisable, visible and legible from a certain distance, and material composition (e.g., use of high-strength materials) to allow the plate to withstand exposure to weathering. In terms of location, an alarm deterrent plate is to be affixed in strategic places, such as at the main entrances of a building, so that the plate can fulfil its deterrent role of alerting the thief to the existence of an alarm system in the area.

In this context, for an alarm company that offers surveillance services, it is important to have automatic and intelligent mapping of all installed alarm systems, for more effective management of their operation, especially with regard to maintenance procedures. Additionally, it would also be advantageous for these companies to be able to automatically identify buildings that do not yet have an alarm system installed, thus allowing them to identify new business opportunities.

The solutions offered by the state of the art are highly dependent on the use of dedicated cameras to acquire image data, which will be subsequently processed using OCR technology. This results in highly complex solutions, both in terms of hardware and software, which implies high implementation and maintenance costs.

As such, the state of the art does not disclose a solution that is hardware agnostic and that can still be able to automatically and assertively identify and map alarm deterrent plates.

The present solution intended to innovatively overcome such issues.

### SUMMARY

It is therefore an object of the present application a cloud-based system for detection an alarm deterrent plate on a subject-building. Such system therefore provides an agnostic hardware solution for automatically and assertively identify and map alarm deterrent plates based on street view imagery data.

In an advantageous configuration of configuration of the system of the present application, it is comprised by an Artificial Intelligence detection unit, hereinafter referred to as Al detection unit, provided with an Al engine and a training module. The Al engine is programmed to execute at least an alarm deterrent plate detection model, configured to analyse street view imagery data, containing at least one street view image of a subject building, in order to detect an alarm deterrent plate on said subject building. In its turn, the training module is comprised of a training engine configured to train at least the alarm deterrent plate detection model to be executed by the AI engine, with an alarm deterrent plate training dataset. Additionally, the training engine is configured to generate an alarm deterrent plate training dataset by selecting street view images, illustrating a plurality of buildings having different types of alarm deterrent plates, which have a field of view of 60°.

Since street view images with this feature represent the configuration with a more appropriate viewing angle, allowing to be obtained a better image quality and scope view ratio for each image, by training the AI engine with such training images the effectiveness of detection process that is carried out is increased, both in terms of speed and efficiency.

### DESCRIPTION OF FIGURES

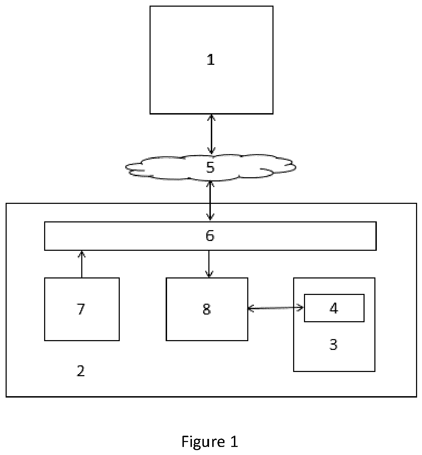

Figure 1 - representation of an embodiment of the cloud-based system for detecting deterrent plates on a subject building described in the present application. The reference signs represent:
1 - street view imagery provider;
2 - AI detection unit;
3 - AI engine;
4 - training module;
5 - wireless communication network;
6 - wireless interface module;
7 - address repository database;
8 - storage module.

### DETAILED DESCRIPTION

The more general and advantageous configurations of the system of the present application are described in the Summary. Such configurations are detailed below in accordance with other advantageous and/or preferred embodiments of implementation of the system.

The present application relates to a cloud-based system for detecting alarm deterrent plates on a subject building, using street view imagery data provided by a street view imagery provider. This data is subsequently processed using computer vision algorithms adapted to identify alarm deterrent plates on subject buildings. In a complementary way, street view imagery data may also be used to determine the typology of each building. This implementation, as it does not use images obtained directly from dedicated cameras but instead use street view images collect and provided by a street view imagery provider, has the advantage of being agnostic in terms of hardware, thus allowing to quickly and effectively have an aggregated view of the number of buildings with surveillance, that is, with an alarm system installed, thus enabling more active management of each of them by alarm companies.

In the context of the present application, an alarm deterrent plate is a plate that meets the requirements established to configure an alarm deterrent plate, especially with regard to its graphic design, having a particular shape and presenting at least one alarm company logo and a specific colour combination. In particular, an alarm deterrent plate is generally rectangular in shape, and presents a specific colour configuration that, together with the logo, identifies the alarm company providing the surveillance service.

Alarm deterrent plates are to be installed in strategic places such as at the main entrances of a building, but not limited to this location, so that the plate can fulfil its deterrent role. A main entrance is typically the front entrance of any building, being characterized by having a main entrance door and other particular elements in the surroundings such as front steps, hand railings, entrance lights or door handles. Since it is the preferred entry point into a building, and in many building layout configurations it is even the only entry point of a building, this tends to be the ideal location for installing alarm deterrent plates.

Also in the context of this application, the term "subject building" is used to refer to a building that is to be analysed for the purpose of detecting the presence of an alarm deterrent plate. Generally, a building may have different designs and may come in a variety of sizes, forms and architectural styles. In this context, each building is characterized by its own typology, which is the set of physical characteristics that, in an urban context, distinguishes said building from the others. More particularly, it may refer to a classification that defines the type of housing based on a particular layout, number of rooms, division of areas, among other factors. This information is also important, as, when combined with the detection of an alarm deterrent plate, it allows alarm companies to have complete information regarding the subject building, which is especially advantageous for predicting and implementing maintenance procedures for the installed alarm systems.

A building is associated with a building address which provide means for physically locating the respective building. Typically, an address is a collection of information having a standard format, to inform the location of a building using street names as references, along with identifiers such as a building number, and/or special codes such as a postal code. Additionally, a building may also be located by means of a geographical location that may have a direct correspondence with the building address. Therefore, the information regarding a subject building address may be used to collect street view imagery data illustrating the respective subject building by querying the street view imagery provider (1) for street view imagery data associated with a correspondent geographical location.

In the context of the present application, a street view imagery provider (1) is a cloud-based mapping platform that provides street view imagery data. Such data is collected from street view placemarks, i.e., spots on a street, and for each placemark it is possible to obtain a 360° spherical view that may be broken down into, typically, four side views and one upward view. Thus, street view imagery data represents a compilation of interactive panoramic street view images, taken from positions along a street network and associated with a respective geographical location, that are able to depict the built environment and to provide data to support urban-related analysis. More specifically, from a set of street view images illustrating a particular subject building, it may be possible to extract the building facade in order to assess, for example, building structure and typology, and to detect the presence of particular objects that may be identified from such images, such as alarm deterrent plates affixed to the facade.

A street view image has a fixed size viewport and has a specific field of view, defining the capturing means' angle in relation to a horizontal plane which was used for capturing the image. More particularly, when dealing with fixed-size viewport, the parameter field of view in essence represents zoom. By default, a field of view of a street view image is set to 90°, with smaller degrees indicating a higher level of zoom. In the present case, for the purpose to be achieved with the solution described in this application, it was found that using street view images with a field of view of 60° as training images is advantageous, since it allows a better quality and scope view ratio to be obtained, thus being able to train the model to be executed by the Al engine in a more efficient way.

The system described in the present application are implemented over a wireless communication network (5). Said network (5) interconnects all computational modules used to implement the system for data transmission, storage and processing purposes.

In this context, Figure 1 illustrates an embodiment of the system described in the present application. Said system comprises an AI detection unit (2), including an AI engine (3) and a training module (4), and a wireless communication network (5) configured to establish a bidirectional data communication protocol adapted to at least obtain street view imagery data from a street view imagery provider (1). In this regard, the AI detection unit (2) may further comprise a wireless interface module (6) configured to support download of street view imagery data. Such data is to be processed by the modules (3, 4) of the AI detection unit (2) in order to at least detect the presence of an alarm deterrent plate on a subject building being illustrated by the street view imagery data. Additionally, the AI detection unit (2) may further comprise an address repository database (7) for storing subject building addresses, which may be used to download street view imagery data that has a correspondent geographical location. The detection unit (2) may further comprise a storage module (8) for storing target street view images, associated with a subject building address contained in the address repository database (7), those images being used by the training engine of the training module (4) to generate the training dataset to train the model to be executed by the AI engine (2).

### EMBODIMENTS

In one embodiment of the cloud-based system for detecting an alarm deterrent plate on a subject building described in the present application, it comprises:
- an AI detection unit (2) comprising:
   - an AI engine (3) programmed to execute at least an alarm deterrent plate detection model, configured to analyse street view imagery data, containing at least one street view image of a subject building, in order to detect an alarm deterrent plate on said subject building;
   - a training module (4) comprising a training engine configured to train at least the alarm deterrent plate detection model with an alarm deterrent plate training dataset; the training engine comprising processing means configured to, at least:

   - analyse street view images of a plurality of buildings having different types of alarm deterrent plates, and to identify as a training image, a street view image with a field of view of 60°;
   - generate the alarm deterrent plate training dataset by integrating the identified training images;
- a wireless communication network (5) configured to establish a bidirectional data communication protocol adapted to connect the AI detection unit (2) with at least a street view imagery provider (1) for obtaining street view imagery data.

The street view imagery provider (1) may be Google Street View^{™}.

The system architecture, being cloud-based, allows all constituent units to be connected through a communication network (5), favouring the transmission and processing of street view imagery data, for the purpose of detecting alarm deterrent plates. More specifically, in this way it is possible to obtain street view imagery data directly from a street view imagery provider (1), thus avoiding the implementation of a more complex hardware architecture that would include dedicated cameras to collect said imagery data. Consequently, in a first advantage to be obtained with the system described in the present application, it is possible to develop a solution for the detection of alarm deterrent plates that is hardware agnostic.

Additionally, the processing carried out by the training engine of the training module (4) on the street view imagery data allows the selection of street view images that meet the specific criteria of having a field of view of 60° as training images to form a training dataset. This aspect is very important since a street view image with this feature represents the configuration with a more appropriate viewing angle, allowing a better image quality and scope view ratio provided by each image.

Therefore, training the model to be executed by the AI engine with training images having a field of view of 60°, increases the effectiveness of the model training, both in terms of speed and efficiency, and the subsequent detection process to be carried out by the AI engine.

In another embodiment of the system, the training images of the alarm deterrent plate training dataset comprise street view images of a plurality of buildings having different types of alarm deterrent plates. More particularly, the different types of alarm deterrent plates may include one or a combination of logos, shapes, colours and printed characters. In this context, the training engine of the training module (4) may be further configured to label training images of the alarm deterrent plate training dataset, according to at least one class representation of alarm deterrent plates. As such, each class may represent an alarm company, which is characterized by presenting an alarm deterrent plate with a unique shape, logo and respective combination of colours. In this way, it is possible not only to detect an alarm deterrent plate but also which alarm company it belongs to.

In another embodiment of the system, the training engine of the training module (4) is further configured to:
- randomly split each training image of the alarm deterrent plate training dataset into a plurality of sub-images;
- resize each sub-image so that a size of a sub-image is equal to a size of the training image;
- incorporate the resized sub-images with the training images, in order to generate an augmented alarm deterrent plate training dataset training dataset;

Additionally, the training engine is further configured to train the alarm deterrent plate detection model with the augmented alarm deterrent plate training dataset. With this processing scheme, it is possible to obtain more images to form the training dataset and to train the model to be executed by the AI engine of the AI module (4). Said images, due to resizing, are able to illustrate larger alarm deterrent plates, facilitating the identification of these elements for training purposes.

In another embodiment of the system, the alarm deterrent plate detection model is an image regression model.

In another embodiment of the system, the AI engine (3) is further configured to execute a building typology detection model. In this context, the training engine of the training module (4) is further configured to train the building typology detection model with a building typology training dataset. Said dataset may comprise street view images of a plurality of different types of buildings as training images. Therefore, it is possible to obtain an automatic mapping of alarm systems installed by a given alarm company, associating information relating to the detection of an alarm deterrent plate with information relating to the typology of the subject building.

Additionally, in another embodiment, the building typology detection model being executed by the AI engine (3), may be configured to detect a main entrance of a subject building and the training images of the building typology training dataset may include street view images of buildings having at least one of:
- a door knocker, doorbell, door handle or a lock;
- front steps, hand railings, entrance lights.

In fact, a main entrance is typically the front entrance of any building and it is the preferred entry point into a building. Consequently, being the ideal location for installing alarm deterrent plates, by processing street view imagery data in order to identify the main entry of a subject building, it is possible to optimize training computational resources, focusing detection processing in the areas adjacent to it.

In another embodiment of the system, the AI detection unit (2) further comprises a wireless interface module (6) configured to support at least downloads of content over the wireless communication network (5). Said content may be related with at least street view imagery data downloadable from the street view imagery provider (1). The AI detection unit (2) may further comprise an address repository database (7), comprising multiple entries, each entry being adapted to store a subject building address. In this context, the wireless interface module (6) is programmed to download from the street view imagery provider (1), target street view images associated with a subject building address contained in an address repository database' s entry. Additionally, the AI detection unit (2) may further comprise storage module (8) comprising storage means adapted to store target street view images. In this context, the training engine of the training module (4) may further be configured to generate a training dataset using target street view images stored in the storage module (8).

The storage module (8) may be Google Cloud Storage^{™}.

With this embodiment, it is possible to train the model to be executed by the AI engine (3) with street view imagery data relative to a specific geographic region. This is especially advantageous from the point of view of the training process being executed by the training module (4), as it allows considering the built environment of each geographic region, which is defined by specific building layout and design characteristics, thus making the training and subsequent detection process more effective. Additionally, it allows mapping of alarm systems installed only in a certain geographical area, defined through subject building addresses, to be achieved in a structured way.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A cloud-based system for detecting an alarm deterrent plate on a subject building; the system comprising:
- an AI detection unit (2) comprising:
- an AI engine (3) programmed to execute at least an alarm deterrent plate detection model, configured to analyse street view imagery data, containing at least one street view image of a subject building, in order to detect an alarm deterrent plate on said subject building;
- a training module (4) comprising a training engine configured to train at least the alarm deterrent plate detection model with an alarm deterrent plate training dataset; the training engine comprising processing means configured to, at least:
- analyse street view images of a plurality of buildings having different types of alarm deterrent plates, and to identify as a training image, a street view image with a field of view of 60°;
- generate the alarm deterrent plate training dataset by integrating the identified training images;
- a wireless communication network (5) configured to establish a bidirectional data communication protocol adapted to connect the AI detection unit (2) with at least a street view imagery provider (1) for obtaining street view imagery data.

2. The system according to claim 1, wherein the training images of the alarm deterrent plate training dataset comprise street view images of a plurality of buildings having different types of alarm deterrent plates; the different types of alarm deterrent plates including one or a combination of logos, shapes, colours and printed characters.

3. The system according to claim 2, wherein the training engine is further configured to:
- label training images of the alarm deterrent plate training dataset, according to at least one class representation of alarm deterrent plates.

4. The system according to any of the previous claims, wherein the training engine is further configured to:
- randomly split each training image of the alarm deterrent plate training dataset into a plurality of sub-images;
- resize each sub-image so that a size of a sub-image is equal to a size of the training image;
- incorporate the resized sub-images with the training images, in order to generate an augmented alarm deterrent plate training dataset;
the training engine being further configured to train the alarm deterrent plate detection model with the augmented alarm deterrent plate training dataset.

5. The system according to any of the previous claims, wherein the alarm deterrent plate detection model is an image regression model.

6. The system according to any of the previous claims, wherein the AI engine (3) is further configured to execute a building typology detection model; and
the training engine is further configured to train the building typology detection model with a building typology training dataset.

7. The system according to claim 6, wherein the building typology training dataset comprises street view images of a plurality of different types of buildings as training images.

8. The system according to claim 6 or 7, wherein the building typology detection model being executed by the AI engine (3), is configured to detect a main entrance of a subject building; the training images of the building typology training dataset including street view images of buildings having at least one of:
- a door knocker, doorbell, door handle or a lock;
- front steps, hand railings, entrance lights.

9. The system according to any of the previous claims, wherein the AI detection unit (2) further comprises a wireless interface module (6) configured to support at least downloads of content over the wireless communication network (5); said content being related with at least street view imagery data downloadable from the street view imagery provider (1).

10. The system according to any of the previous claims as dependent from claim 9, wherein the AI detection unit (2) further comprises an address repository database (7), comprising multiple entries, each entry being adapted to store a subject building address; and wherein,
the wireless interface module (6) is programmed to download from the street view imagery provider (1), target street view images associated with a subject building address contained in an address repository database' s entry.
and wherein,
the training engine is configured to generate the training dataset to train the model to be executed by the AI engine (2) using target street view images.

11. The system according to claim 10, wherein the AI detection unit (2) further comprises a storage module comprising storage means adapted to store target street view images; the training engine being configured to generate the training dataset using target street view images stored in the storage module (8).

12. The method according to claim 11, wherein the storage module (8) is Google Cloud Storage^{™}.

13. The method according to any of the previous claims, wherein the street view imagery provider (1) is Google Street View^{™}.
